# EUROPÄISCHE PATENTSCHRIFT

(11) **EP 0 901 607 B1**
(45) Veröffentlichungstag und Bekanntmachung des Hinweises auf die Patenterteilung: **03.07.2002**
(21) Anmeldenummer: 97923970.4
(22) Anmeldetag: 22.05.1997
(51) Int. Cl.: G01C 1/02, G01S 17/66, G02B 6/12

(54) **OPTISCHER SENSOR ZUM VERFOLGEN EINER ZIELMARKE**
OPTICAL SENSOR FOR TRACKING AN AIMING MARK
DETECTEUR OPTIQUE POUR LA POURSUITE D'UN REPERE DE VISEE

(30) Priorität: 25.05.1996 DE 19621196
(43) Veröffentlichungstag der Anmeldung: 17.03.1999
(73) Patentinhaber: Leica Geosystems AG, 9435 Heerbrugg (CH)
(72) Erfinder: BRAUNECKER, Bernhard, CH-9445 Rebstein (CH); ROGERS, John, Rice, Sierra Madre, CA 91024 (US); GÄCHTER, Bernhard, F., CH-9436 Balgach (CH)
(74) Vertreter: Büchel, Kurt F., Dr.
(86) Internationale Anmeldenummer: EP9702607
(87) Internationale Veröffentlichungsnummer: WO9745700

(56) Entgegenhaltungen:
- EP-A- 0 674 192
- WO-A-90/12284
- FR-A- 2 689 252
- US-A- 5 098 185
- OPTICS LETTERS, Band 18, Nr. 19, Oktober 1993, J RGEN JAHNS & BRUNO ACKLING, "INTEGRATED PLANAR OPTICAL IMAGING SYSTEM WITH HIGH INTER-CONNECTION DENSITY."

## Beschreibung

Die Erfindung bezieht sich auf einen optischen Sensor mit den Merkmalen des Oberbegriffs des Anspruchs 1 und 2.

Solche optische Sensoren werden beispielsweise in automatisch zielausrichtenden Meßinstrumenten für die geodätische Vermessung eingesetzt. Hierbei wird mit einem stationären Meßinstrument, z.B. einem Theodoliten mit motorisierten Schwenkachsen, eine Zielmarke anvisiert. Eine solche Zielmarke kann im einfachsten Fall an einem Lotstock befestigt sein, der von einem Vermessungsingenieur zu verschiedenen Meßstellen im freien Gelände getragen wird. Die Zielmarke kann auch an Straßenbau- oder Tunnelbohrmaschinen angebracht sein, um zusammen mit dem optischen Sensor im stationären Vermessungsinstrument den Vortrieb dieser Maschinen zu steuern.

Bei einer lateralen Bewegung der Zielmarke ergibt sich gegenüber der Beobachtungsrichtung ein Lateralversatz des Zielmarkenbildes auf dem Detektor des Meßinstruments. Durch diese Information kann das Meßinstrument automatisch der Zielmarke nachgeführt werden. Bei einem solchen Verfolgungsoder Trackingsensor werden deshalb permanent die lateralen Lagekoordinaten der Zielmarke ermittelt. Die Zielmarke ist entweder selbstleuchtend oder sie wird von einer meist im Meßinstrument integrierten Strahlungsquelle beleuchtet. Im letzteren Falle muß die Zielmarke reflektiv, retroreflektiv oder streuend sein. Die von der Zielmarke reflektierte oder emittierte Strahlung wird quantitativ durch Form und Richtung ihrer Wellenfront charakterisiert.

Die vom optischen Sensor empfangene Wellenfront wird mittels eines optischen Systems auf einen ortsempfindlichen Detektor geführt. Es ist sinnvoll, die einfallende Wellenfront zu fokussieren, um von der hohen Ortsauflösung moderner optoelektronischer Detektoren auf CCD (Charge-Coupled Device) oder PSD (Positionsempfindliche Diode) Basis zu profitieren. Im einfachsten Fall der Fokussierung erhält man einen eng begrenzten Lichtspot, dessen Ablagekoordinaten (x, y) auf dem Detektor bei endlicher Vergrößerung der optischen Abbildung eindeutig den lateralen Ortskoordinaten der Zielmarke X,Y entsprechen. Liegt die Zielmarke weit entfernt, sind aus (x,y) die angularen Zielmarkenkoordinaten (u,v) eindeutig ableitbar als tan(u,v)=(x,y)/F, wobei F die Brennweite des optischen Systems beschreibt.

Derartige Instrumente für die automatische Erfassung und Verfolgung von Zielmarken sind aus der Zeitschrift Opticus Nr. 5/95, S. 7 der Firma Leica AG mit dem Aufsatz "Das Ziel immer im Auge" und aus der WO 90/12284 bekannt. Diese Instrumente besitzen eine herkömmliche Theodolitfernrohroptik, mit der eine Zielmarke anvisiert und beobachtet werden kann. Mit Hilfe eines Strahlenteilers wird ein Teil der Strahlung aus dem Strahlengang des Fernrohrs ausgekoppelt und mittels einer weiteren Optik auf den optoelektronischen Detektor fokussiert. Weiterhin wird die Beleuchtungsstrahlung für die Zielmarke von einer Strahlungsquelle ausgehend über eine Kondensoroptik und einen weiteren Strahlenteiler in den Strahlengang der Fernrohroptik eingekoppelt und die Fernrohroptik zur Beleuchtung der Zielmarke mitbenutzt. Alternativ dazu kann die Beleuchtung der Zielmarke auch über einen separaten Beleuchtungsstrahlengang mit von der Fernrohroptik getrennten optischen Elementen erfolgen.

Somit enthalten die genannten Meßinstrumente zur Strahlungsführung und zur Abbildung der Zielmarke auf dem Detektor und zur Beleuchtung der Zielmarke einen herkömmlichen optischen Aufbau aus einzelnen optischen Bauelementen. Hierzu müssen Linsen und Prismen einzeln hergestellt, gefaßt, montiert und gegeneinander genau justiert werden. Bei einer geforderten hohen Stabilität des optisch-mechanischen Aufbaus wird dieser entsprechend aufwendig.

Es ist Aufgabe der Erfindung, bei gleichbleibender oder verbesserter Meßgenauigkeit und bei gleichbleibendem oder verbessertem Erfassungsbereich den optischen Aufbau eines Verfolgungssensors aus Kosten-, Platzbedarfs- und Stabilitätsgründen, zur Erhöhung der Fertigungszuverlässigkeit und zur Erhöhung der Verfolgungsgeschwindigkeit zu miniaturisieren, wobei die Herstellung und Montage der optischen Bauteile möglichst in nur einem Arbeitsgang durchgeführt werden soll.

Diese Aufgabe wird erfindungsgemäß durch die im kennzeichnenden Teil der Ansprüche 1 und 2 angegebenen Merkmale gelöst. Vorteilhafte Weiterbildungen und Ausgestaltungen ergeben sich aus den Merkmalen der Unteransprüche.

Die monolithische Integration von optischen Elementen auf einem Quarzglassubstrat ist an sich bekannt. in Optics Letters, Vol. 18, No. 19 (Oct. 1, 1993), P. 1594-1596, wird zum Beispiel ein integriertes planares optisches Abbildungssystem beschrieben, mit dem die Struktur eines Pixel-Arrays von einer Eingangsseite zu einer Ausgangsseite eines hybrid aufgebauten Abbildungssystems über einen geschlossenen Strahlengang übertragen wird.

Erfindungsgemäß wird die Strahlungsführung so gestaltet, daß die Strahlung zur Beleuchtung der Zielmarke den Grundkörper in einem bestimmten Oberflächenbereich verläßt. Nach der Reflexion an der Zielmarke tritt die Strahlung wieder in den Grundkörper ein. Dabei sind alle Lageveränderungen der Strahlung auf dem Detektor ausschließlich auf eine Richtungsveränderung der Strahlung außerhalb des Grundkörpers zurückzuführen. Die Strahlungsführung im Grundkörper durch die monolithisch integrierten optischen Elemente bleibt stabil. Die monolithische Integration eröffnet darüber hinaus eine große Vielfalt an Gestaltungsmöglichkeiten für die optischen Elemente und eine einfache Anpassung bei der Forderung nach einer höheren Meßgenauigkeit.

Der Begriff der monolithischen Integration von optischen Elementen auf oder / und in einem Grundkörper soll hier sowohl im engeren als auch in einem weiteren Sinne verstanden werden. Streng monolithisch integriert bedeutet, daß alle optischen Elemente aus ein und demselben Grundkörper hervorgehen - direkt bei der Herstellung des Grundkörpers oder bei dessen Bearbeitung. So können beispielsweise optische Elemente aus dem Grundkörper herausgeätzt, herausgefräst oder in dem Grundkörper eingeätzt, eingefräst oder entsprechende Strukturen eingraviert, eingepreßt oder eingeprägt sein. Ebenso können sie auch durch Blankpressen oder durch Spritzgußverfahren entstehen.

Werden mehrere solcher Grundkörper fest und unlösbar miteinander verbunden, so soll diese Gesamtheit ebenfalls eine monolithische Einheit darstellen.

Im erweiterten Sinne soll als monolithische Integration auch die Replikation von optischen Elementen gelten. Dabei werden verformbare Materialien auf dem Grundkörper aufgebracht und mittels einer Abdruckform in eine bestimmte geometrische Form gebracht und dann z.B. durch chemische, thermische oder UV-Behandlung in ihrer Geometrie und auf dem Grundkörper fixiert. Dadurch sind die optischen Elemente bereits bei ihrer Erzeugung unlösbar zueinander ausgerichtet.

Schließlich sollen auch optische Elemente, die durch Aufdampfen von Materialien auf dem Grundkörper erzeugt werden, als monolithisch integriert verstanden werden.

Wie in vielen Anwendungen der Photonik werden auch bei einem modernen optischen Verfolgungssensor eine Reihe von Anforderungen an das zugehörige optische System gestellt. Eine präzise Ausrichtung der optischen Komponenten untereinander und mechanische und thermische Langzeitstabilität werden ebenso gefordert wie eine geringe Größe des optischen Aufbaus und niedrige Herstellkosten. Für Vorrichtungen aus frei aufgebauten einzelnen optischen Komponenten ist es nicht möglich, alle Bedingungen gleichzeitig zu erfüllen. Alle bekannten Lösungen stellen Kompromisse mit Schwerpunkt auf einzelne Anforderungen dar. Erfindungsgemäß führt die monolithische Integration von optischen Bauelementen auf einem Grundkörper für einen Verfolgungssensor zu einem zuverlässigen, kompakten und kostengünstigen optischen System, das nahezu alle Anforderungen gleichzeitig erfüllt.

Ein optisches Element kann für sich allein auf einem Grundkörper monolithisch integriert werden. Jedoch ergeben sich die großen Vorteile der monolithischen Integration durch die gleichzeitige Herstellung einer Vielzahl von gleichartigen oder verschiedenartigen optischen Elementen auf einem gemeinsamen Grundkörper. So können alle für den Verfolgungssensor notwendigen abbildenden und strahlungsumlenkenden optischen Elemente als komplette Einheit in einem Herstellungsprozeß gleichzeitig entstehen. Dabei hat sich herausgestellt, daß die Fertigungszuverlässigkeit einer solchen Einheit sehr hoch ist.

Bei herkömmlichen optischen Aufbauten aus Einzelelementen werden unterschiedliche Materialien für die optischen Elemente und deren Fassungen und Halterungen verwendet, die unterschiedliche Materialeigenschaften wie unterschiedliche Wärmeausdehnungskoeffizienten besitzen. Demgegenüber sind die in einem einzigen Grundkörpermaterial monolithisch integrierten optischen Elemente hinsichtlich mechanischer und thermischer Einflüsse erheblich langzeitstabiler. Zudem sind sie aufgrund ihrer Herstellung bereits gegenseitig justiert und fest "montiert". Eine Verstellung oder Dejustage ist nicht mehr möglich. Durch den Wegfall von Montage- und Justierarbeiten werden Arbeitskosten eingespart und eine Massenproduktion ermöglicht. Auch die Materialkosten sind durch die Reduzierung vieler einzelner Komponenten zu einem einzigen Bauteil erheblich geringer. Nicht zuletzt bedeutet der kompakte Aufbau einer abbildenden Optik aus monolithisch integrierten optischen Elementen auf einem kleinen Grundkörper ein äußerst geringes Gewicht und eine sehr geringe Platzbeanspruchung im Vergleich zu einer herkömmlich aufgebauten Optik. Dies ist insbesondere beim Einsatz von tragbaren Vermessungsinstrumenten wie elektronischen Theodoliten von Vorteil. Ganz in Analogie zu dem in solchen Geräten vorhandenen modernen elektronischen Aufbau mit den integrierten Schaltkreisen der Mikrochips wird somit auch der optische Aufbau leicht und kompakt gestaltet.

Für die Strahlungsführung können reflektive, refraktive oder diffraktive optische Elemente verwendet werden. Als nichtabbildende optische Elemente zur Strahlungsführung innerhalb des Grundkörpers eignen sich vorteilhaft die Oberflächen des Grundkörpers selbst, an denen durch Totalreflexion eine Strahlungsumlenkung stattfinden kann. Eine Strahlungsumlenkung kann auch durch reflektierende Filme erreicht werden, die an bestimmten Stellen auf der Grundkörperoberfläche aufgebracht werden.

Die reflektiven optischen Elemente können aber auch sphärische oder asphärische Oberflächen besitzen. Dadurch erhalten sie zusätzlich auch abbildende Eigenschaften. Somit läßt sich die gesamte Optik des Verfolgungssensors allein mit verschiedenen reflektiven Elementen darstellen und als eine einzige monolithische Einheit herstellen.

Eine solche Einheit kann beispielsweise aus Glas durch Blankpressen oder aus Kunststoff durch Spritztechnik hergestellt werden. Die so hergestellte monolithische Einheit kann auf einer Trägerplatte befestigt werden oder kann selber die Rolle der Trägerplatte übernehmen. Darüber hinaus können auch mehrere monolithische Einheiten - ggf. auch mit verschiedenen Grundkörpermaterialien - zu einer gesamten Einheit zusammengefaßt werden. Dabei können die einzelnen Einheiten einen bestimmten Abstand voneinander besitzen oder auch direkt aufeinander aufgebaut sein. Dadurch erhält man einen größeren Spielraum für die optischen Weglängen oder für die Anordnung der integrierten optischen Elemente untereinander.

In Analogie zu dem beschriebenen integrierten optischen Aufbau mit reflektiven optischen Elementen können ebenso refraktive Elemente auf einem Grundkörper oder auf mehreren Grundkörpern monolithisch integriert werden. Auch mit integrierten refraktiven optischen Elementen sind sowohl strahlungsumlenkende als auch abbildende Eigenschaften zu erreichen. Hierzu werden in bekannter Weise Prismen- und Linsenwirkungen ausgenutzt. Selbstverständlich ist eine Kombination von refraktiven und reflektiven optischen Elementen auf einem Grundkörper möglich. Aufgrund der monolithischen Integration ergeben sich für einen solchen Verfolgungssensor Kosten- und Platzersparnisse.

Der Platzbedarf der beschriebenen refraktiven bzw. reflektiven Lösungen kann durch Anwendung von Fresnellinsen bzw. Fresnetspiegeln noch weiter reduziert werden. Fresnellinsen und -spiegel sind optische Elemente, deren Flächen nur stufenweise kontinuierlich sind.

Bei Stufenabmessungen in der Größenordnung der verwendeten optischen Wellenlänge ändert sich der physikalische Mechanismus der Strahlungsablenkung. Anstelle refraktiver, resp. reflektiver Wirkung wird die Strahlungsbeeinflussung nunmehr durch Beugungsphänomene physikalisch beschrieben.

Mit Hilfe derartiger diffraktiver Strukturen werden gleichfalls strahlungsumlenkende und abbildende optische Elemente hergestellt, wie z.B. mit einer Fresnel - Zonenplatte oder mit einem holographischen Element, also einem Element mit lokal variabler Gitterstruktur.

Derartige Mikrogitterstrukturen sind auf verschiedene Weise in der Oberfläche eines Grundkörpers implementierbar. Zum einen können die Strukturen dort durch Ätzen oder Prägen hergestellt werden. Zum anderen können sie auf die Grundkörperoberfläche aufgebracht, z.B. aufgedampft oder aufgeklebt werden. Verschiedene Lithografie-, Ätz- und Aufdampfverfahren sind bekannt. Insbesondere werden mit optischer Lithografie und reaktivem lonenätzen Strukturen auf Glassubstraten hergestellt.

Eine andere Gruppe von Verfahren zur Herstellung integrierter optischer Elemente sind holografische Verfahren, bei denen sich durch Interferenz mehrerer Lichtverteilungen Gebiete mit räumlich variierender Intensität erzeugen lassen. Bringt man eine, mit lichtempfindlichem Lack bestrichene Glasplatte in das Interferenzgebiet, kommt es zu einer entsprechend räumlich variablen Belichtung, die nach Entwicklung des Lacks als beugende Gitterstruktur im Sinne der oben gemachten Ausführungen wirkt.

Bei dem erfindungsgemäßen optischen Verfolgungssensor wird mittels der Strahlungsquelle und ersten strahlungsumlenkenden und abbildenden monolithisch integrierten optischen Elementen die Zielmarke beleuchtet. Dazu verläßt die Strahlung den Grundkörper in einem dafür vorgesehenen Oberflächenbereich. Die Zielmarke reflektiert die Strahlung. Die reflektierte Strahlung tritt in den Grundkörper wieder ein und wird mittels zweiter optischer Elemente auf den Detektor geführt. Der ortsempfindliche optoelektronische Detektor setzt die empfangene Strahlungsverteilung in entsprechende elektrische Signale zur weiteren Auswertung um. Verändert sich die räumliche Lage der Zielmarke aufgrund ihrer lateralen Bewegung, so verändern sich die Koordinaten der Strahlungsverteilung auf dem Detektor. Diesen Veränderungen entsprechend wird der Verfolgungssensor der Zielmarke nachgeführt.

Bei den bisherigen automatischen Zielverfolgungsgeräten im geodätischen Einsatz wird die gesamte Optik des Theodoliten der Zielmarke nachgeführt. Die Schwenkachsen des Theodolitfernrohrs werden dazu motorisch betätigt.

Der erfindungsgemäße Verfolgungssensor mit monolithisch integrierter Optik ersetzt die komplette Optik des Theodoliten. Hierbei wird der Grundkörper mit den optischen Elementen, der Strahlungsquelle und dem Detektor der sich bewegenden Zielmarke nachgeführt. Das erheblich geringere Gewicht und Volumen der monolithisch integrierten Optik gegenüber einer aus einzelnen optischen Bauteilen aufgebauten Fernrohroptik mit zugehörigen Halterungen führt dabei zu mehreren Vorteilen. Zum einen sind dadurch die mechanischen Fliehkräfte auf das bewegliche mechanisch-optische System deutlich geringer. Dies bedeutet eine erhöhte Beweglichkeit des Systems und somit eine schnellere Verfolgbarkeit der Zielmarke. Dadurch wiederum erschließen sich neue, über die geodätische Vermessung hinausgehende Anwendungsfelder in der industriellen Vermessungstechnik und Qualitätskontrolle. Beispielsweise kann eine Zielmarke an einem Roboterarm angebracht werden, um die Genauigkeit der Bahnbewegungen des Roboterarms unter verschiedenen Lastzuständen zu überprüfen. Hierfür ist ein schneller Verfolgungssensor Voraussetzung.

Zum anderen können bei einem geringeren Kraftaufwand die elektrischen Antriebsmotore für die Zielmarkenverfolgung in ihrer Größe und Leistung und somit in ihrem Stromverbrauch deutlich reduziert werden. Dies ist für die batteriebetriebenen, transportablen Vermessungsinstrumente von Vorteil. Insbesondere bei Vermessungsarbeiten im Gelände ermöglicht das geringere Gewicht von Optik und Mechanik eine leichtere Handhabung.

Ohne die Femrohroptik entfällt zwar der sonst mögliche Einblick in das Fernrohrokular. Andererseits ist ein solcher Einblick auch nicht mehr notwendig, denn eine Grobanzielung der Zielmarke über Kimme und Korn ist vollkommen ausreichend. Während der Grobanzielung wird die Zielmarke automatisch erfaßt, d.h. die Beleuchtungsstrahlung des Verfolgungssensors trifft dabei die Zielmarke und die daran reflektierte Strahlung wird detektiert. Die Verfolgung der Zielmarke erfolgt wie beschrieben ebenfalls automatisch, so daß sich auch hier die Beobachtung durch ein Fernrohr erübrigt.

Natürlich können unter gegebenen Umständen statt des kompletten Ersatzes der Fernrohroptik durch die integrierte Optik auch gemischte Varianten dargestellt werden. Beispielsweise kann ein bereits bestehendes Femrohrobjektiv zusammen mit dem erfindungsgemäßen Verfolgungssensor kombiniert werden. Die monolithisch integrierten optischen Elemente werden dabei auf die optischen Eigenschaften des Fernrohrobjektivs entsprechend abgestimmt. Dabei kann der Strahlengang des Fernrohrobjektivs aufgeteilt werden, um getrennte Strahlengänge für die Beleuchtungsstrahlung und den Strahlungsempfang zu erreichen. Beide Strahlengänge können aber auch gemeinsam das Fernrohrobjektiv vollständig nutzen, wobei sie in diesem Fall über einen Strahlenteiler zusammengeführt werden müssen.

Anstelle einer reflektierenden Zielmarke kann auch eine selbstleuchtende Zielmarke verwendet werden. Hierbei kann die Strahlungsquelle und der Beleuchtungsstrahlengang entfallen und der Verfolgungssensor beinhaltet nur noch den Empfangsstrahlengang und den Detektor.

Bei den bisherigen Betrachtungen erzeugt die Zielmarke ein punktförmiges Bild oder einen Lichtfleck auf dem Detektor. Dabei ergibt sich die Genauigkeit der lateralen bzw. angularen Lage der Zielmarke aus der Meßgenauigkeit der Lagekoordinaten des Zielmarkenbildes auf dem Detektor. Zudem wird der Meß- oder Erfassungsbereich der Zielmarke durch die Abmaße der aktiven Detektorfläche bestimmt, da ein über die aktive Detektorfläche hinauswanderndes Zielmarkenbild nicht mehr registriert wird.

Die Meßgenauigkeit und der Erfassungsbereich der Zielmarke lassen sich deutlich verbessern, wenn im Strahlengang zwischen der Strahlungsquelle und dem Detektor ein die Wellenfront der Strahlung derart strukturierendes optisches Element angeordnet ist, daß auf dem Detektor eine Intensitätsverteilung mit mehr als einem Intensitätsmaximum erzeugt wird. Bei einer lateralen Bewegung der Zielmarke verschiebt sich die Intensitätsverteilung auf der Detektorfläche.

Die Lageauswertung mehrerer Intensitätsmaxima, die beispielsweise mit der bekannten Methode der Mittelwertbildung oder durch Fit-Algorithmen erfolgen kann, führt zu einem besseren Signal-Rauschverhältnis und somit zu einer verbesserten Meßgenauigkeit. Bei einer Verschiebung der Intensitätsverteilung auf dem Detektor durch die Zielmarkenbewegung erscheinen neue Intensitätsmaxima auf der aktiven Detektorfläche, während gegenüberliegende bisherige Intensitätsmaxima die aktive Detektorfläche verlassen. Somit ergibt sich zugleich auch ein größerer Erfassungsbereich für die Zielmarke. Aufgrund der bekannten Strukturen des optischen Elements ist die damit erzeugte Intensitätsverteilung eindeutig bestimmt und kann der lateralen Lage der Zielmarke zugeordnet werden.

Vorteilhafterweise wird das die Wellenfront strukturierende optische Element im Grundkörper monolithisch integriert, vorzugsweise im Empfangsstrahlengang des Verfolgungssensors. Ein solches optisches Element kann unter anderem durch polarisierende, transmissive, reflektive, refraktive oder diffraktive Strukturen dargestellt werden. Sie beeinflussen die Wellenfronten der Strahlung räumlich. Beispielsweise wird bei unterschiedlich refraktiven Strukturen die Strahlung in unterschiedliche Richtungen gelenkt. Oder durch Beugungsstrukturen entstehen Beugungsmaxima verschiedener Ordnungen. Dadurch können jeweils zweidimensionale Intensitätsmuster auf dem Detektor erzeugt werden. Sie stellen die gewünschte Intensitätsverteilung mit mehr als einem Intensitätsmaximum dar. Dabei können die Strukturen sogar derart ausgestaltet werden, daß sie neben der Erzeugung von Intensitätsmustern zugleich auch abbildende Eigenschaften aufweisen.

Eine besondere Meßempfindlichkeit ergibt sich aus einem Intensitätsmuster, dessen Ortsgrundfrequenz oder eine seiner harmonischen Ortsoberfrequenzen mit der Ortsgrundfrequenz der strahlungsempfindlichen Strukturen des Detektors ein niederfrequentes Überlagerungsmuster bildet. Das niederfrequente Überlagerungsmuster wirkt in derselben Art und Weise wie ein Moirémuster. Von Moirémustern ist bekannt, daß sie sehr empfindlich auf eine Verschiebung der sie erzeugenden Strukturen reagieren. Dies bedeutet hier, daß bereits bei einer sehr geringen Veränderung des Intensitätsmusters auf dem Detektor gegenüber dessen Pixelstruktur sich das niederfrequente Überlagerungsmuster in seiner Ortsfrequenz stark ändert. Die Änderung des Überlagerungsmusters ist somit ein sehr empfindlich reagierender Indikator für Richtungsveränderungen der Zielmarke. Somit kann deren Richtung sehr genau festgestellt werden.

Zur Erzeugung eines solchen Überlagerungsmusters ist die monolithische Integration der Strukturen des optischen Elements von entscheidender Bedeutung, da diese dadurch in ihren geometrischen Abmaßen den sehr kleinen strahlungsempfindlichen Strukturen des Detektors entsprechend angepaßt und hergestellt werden können.

Im folgenden werden mehrere Ausführungsbeispiele der Erfindung anhand der Zeichnung näher erläutert. Es zeigt
- Fig. 1: eine schematische Darstellung eines optischen Verfolgungssensors mit reflektiven optischen Elementen, die im strengen Sinne monolithisch integriert sind, und einer reflektierenden Zielmarke,
- Fig. 2: eine Variante des Verfolgungssensors gemäß Fig.1 mit einer zusätzlichen Grundplatte,
- Fig. 3: eine schematische Querschnittsdarstellung eines optischen Verfolgungssensors mit reflektiven optischen Elementen, die auf einem Grundkörper aufgebracht und mit diesem unlösbar verbunden sind,
- Fig. 4: eine schematische Querschnittsdarstellung eines optischen Verfolgungssensors mit monolithisch integrierten refraktiven optischen Elementen,
- Fig. 5: eine schematische Querschnittsdarstellung eines optischen Verfolgungssensors mit monolithisch integrierten diffraktiven optischen Elementen,
- Fig. 6: einen Verfolgungssensors gemäß Fig.5 mit einem monolithisch integrierten, die Wellenfront der Strahlung strukturierenden optischen Element und
- Fig. 7: eine schematische Darstellung eines optischen Verfolgungssensors mit einer selbstleuchtenden Zielmarke.

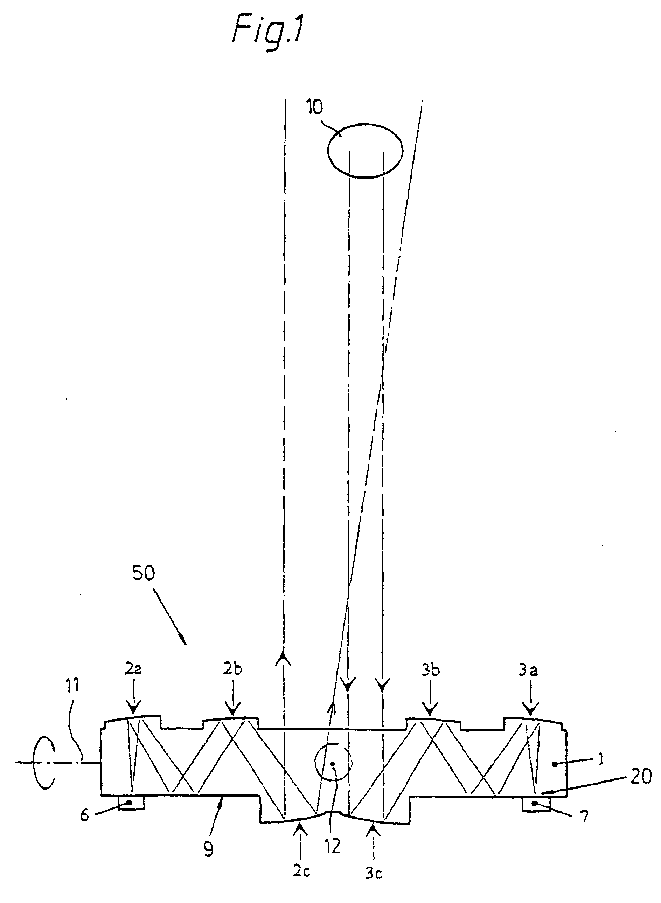

In Fig. 1 ist ein erfindungsgemäßer optischer Verfolgungssensor 50 schematisch im Querschnitt dargestellt, wie er zum Beispiel in Vermessungsinstrumenten zur Verfolgung einer Zielmarke 10 bei der geodätischen Vermessung oder zur Kontrolle der Bewegung eines Roboterarms eingesetzt werden kann. Der Verfolgungssensor 50 besteht aus einem für die optische Strahlung transparenten Grundkörper 1. Dieser ist mit reflektiven optischen Elementen 2a, 2b, 2c, 3a, 3b, 3c ausgestattet, deren Reflexionseigenschaften für die Strahlungsführung ausgenutzt werden. Die optischen Elemente 2a, 2b, 2c, 3a, 3b, 3c sind gemäß der Definition zu Beginn der Beschreibung im strengen Sinn monolithisch integriert, d.h. sie bestehen aus ein und demselben Grundkörper 1 und sind bei dessen Herstellung oder Bearbeitung aus einem Stück hervorgegangen.

Die reflektiven optischen Elemente 2a, 2b, 2c, 3a, 3b, 3c sind in diesem Ausführungsbeispiel mit gekrümmten Oberflächen ausgebildet, weshalb sie abbildende Eigenschaften besitzen. Die Krümmung ist im allgemeinen zylindrischer, sphärischer oder asphärischer Art. Eine Strahlungsquelle 6 und erste optische Elemente 2a, 2b, 2c dienen der Beleuchtung der Zielmarke 10. Nach Durchlaufen dieses Beleuchtungsstrahlenganges verläßt die Strahlung den Grundkörper 1 in Richtung der Zielmarke 10. Die Zielmarke 10 wird vorteilhafterweise mit guten Reflexionseigenschaften ausgestattet. Insbesondere ist als Zielmarke 10 ein Retroreflektor gut geeignet, der die einfallende Strahlung nahezu unabhängig von ihrem Einfallswinkel zurückreflektiert.

Nach der Reflexion der Strahlung an der Zielmarke 10 tritt die Strahlung wieder in den Grundkörper 1 ein und wird durch eine Gruppe zweiter optischer Elemente 3a, 3b, 3c auf einen ortsempfindlichen optoelektronischen Detektor 7 fokussiert. Im allgemeinen entsteht dabei ein - gegebenfalls punktförmiger - Strahlungsfleck 20 auf dem Detektor 7. Die dadurch erzeugten elektrischen Detektorsignale werden in einer hier nicht dargestellten Auswerteelektronik verarbeitet.

Die Koordinaten des Strahlungsflecks 20 auf dem Detektor 7 verändern sich bei einer lateralen Bewegung der Zielmarke 10. Der detektierten Lageveränderung entsprechend steuert die Auswerteelektronik die Motoren zweier mit dem Grundkörper 1 verbundener Kippachsen 11, 12 an. Dabei erfolgt eine Verkippung des Grundkörpers 1 derart, daß der Strahlungsfleck 20 wieder in seine ursprüngliche Position auf dem Detektor 7 gelangt. Durch Wiederholung dieses Vorgangs kann die Zielmarke 10 kontinuierlich verfolgt werden. An den Kippachsen 11, 12 angebrachte Winkelencoder ermöglichen die laterale Positionsbestimmung der Zielmarke 10 bezüglich eines mit dem Vermessungsinstrument verbundenen Koordinatensystems. Aufgrund des geringen Gewichts des Grundkörpers 1 können dessen Verkippungen zur Zielmarkenverfolgung äußerst schnell und exakt erfolgen, was mit einer herkömmlichen Zielfernrohroptik mit einer erheblich größeren trägen Masse kaum möglich ist.

Die Darstellung in Fig.1 zeigt alle Elemente des Verfolgungssensors 50 wie die Strahlungsquelle 6, die Zielmarke 10, den Detektor 7 und die optischen Elemente 2a, 2b, 2c, 3a, 3b, 3c linear hintereinander angeordnet. Dies ist für die Gesamtfunktion des Verfolgungssensors 50 aber nicht zwingend notwendig. Die genannten Elemente können auch seitlich versetzt zueinander auf bzw. in dem Grundkörper 1 monolithisch integriert sein, wobei die Strahlungsführung entsprechend ausgelegt wird.

Im Strahlengang des Grundkörpers 1 dient die ebene Fläche 9 der Strahlungsreflexion, um insgesamt einen kontinuierlichen Strahlenverlauf zu gewährleisten. Zu diesem Zweck kann die Fläche 9 mit reflektierenden Materialien beschichtet oder bedampft sein. Diese Möglichkeit besteht auch für die Oberflächen der reflektiven optischen Elemente 2a, 2b, 2c, 3a, 3b, 3c. Ebenso kann aber auch die Totalreflexion ausgenutzt werden.

Der Strahlengang verläuft - von der Wegstrecke zwischen Grundkörper 1 und Zielmarke 10 abgesehen - ausschließlich innerhalb des Grundkörpers 1. Deshalb kann eine solche Anordnung in hohem Maße kompakt gestaltet werden. Somit zeichnet sie sich auch durch eine hohe Stabilität aus. Allerdings werden an den Grundkörper 1 hohe Anforderungen hinsichtlich der optischen Homogenität gestellt.

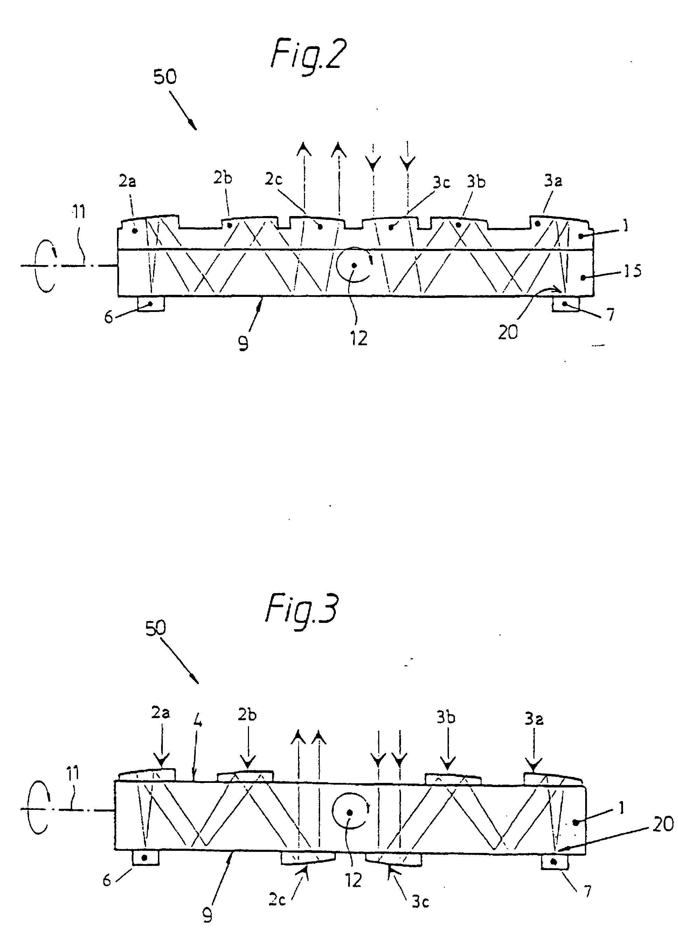

Diese Anforderungen können mit einem dünneren Grundkörper 1 verringert werden. So zeigt Fig. 2 eine Variante des Verfolgungssensors 50 von Fig. 1, bei der zusätzlich eine Grundplatte 15 auf dem Grundkörper 1 aufgekittet oder aufgesprengt ist. Die Grundplatte 15 dient zum einen als Trägerplatte. Dadurch kann der Grundkörper 1 mit den monolithisch integrierten optischen Elementen 2a, 2b, 2c, 3a, 3b, 3c vorteilhafterweise dünn gehalten werden. Über die Dicke der Grundplatte 15 wird zudem ein Anpassungsfreiheitsgrad, z.B. für eine Nachfokussierung gewonnen. Die Grundplatte 15 kann aus dem gleichen Material bestehen wie der Grundkörper 1. Die Gesamtfunktion der Anordnung gemäß Fig.2 ist dieselbe wie unter Fig.1 beschrieben.

Fig. 3 zeigt eine schematische Querschnittsdarstellung eines Verfolgungssensors 50 mit reflektiven optischen Elementen 2a, 2b, 2c, 3a, 3b, 3c, die durch Replikation auf den Flächen 4 und 9 auf dem Grundkörper 1 erzeugt wurden. Bei der Replikation werden verformbare Materialien auf dem Grundkörper 1 aufgebracht und mit Hilfe eines Werkzeugs, z. B. einer Negativform, zu geeigneten, die optischen Eigenschaften bestimmenden Strukturen gepreßt. Diese Strukturen werden durch chemische, thermische oder UV-Behandlung fixiert. Die optischen Elemente 2a, 2b, 2c, 3a, 3b, 3c sind damit bereits bei ihrer Erzeugung zueinander ausgerichtet und unlösbar mit dem Grundkörper 1 verbunden. Alle optischen Elemente 2a, 2b, 2c, 3a, 3b, 3c können prinzipiell auf nur einer einzigen Fläche 4 des Grundkörpers 1 angeordnet werden, ähnlich wie es in Fig.2 dargestellt ist.

Natürlich können auch mehr als die in allen Figuren gezeigten optischen Elemente 2a, 2b, 2c, 3a, 3b, 3c im Grundkörper 1 monolithisch integriert werden. Damit lassen sich optische Abbildungseigenschaften verbessern. Grundsätzlich können auch bei allen Ausführungsbeispielen die Flächen 4 und 9 gekrümmt sein und dadurch selbst Linsenoberflächen darstellen. Weiterhin können auch an den Flächen 4 und 9 zusätzliche Reflexionen stattfinden. Durch die Anzahl der Reflexionen werden die Längen der optischen Wegstrecken zwischen der Strahlungsquelle 6, den optischen Elementen 2a, 2b, 2c, 3a, 3b, 3c und dem Detektor 7 bestimmt. Somit ergibt sich ein zusätzlicher Freiheitsgrad für die optischen Abstände der abbildenden Elemente 2a, 2b, 2c, 3a, 3b, 3c. Dies kann auch bei aufeinander gestapelten Grundkörpern 1 verschiedener Größe durch deren unterschiedliche Dicken oder durch Verwendung unterschiedlichen optischen Materials erreicht werden.

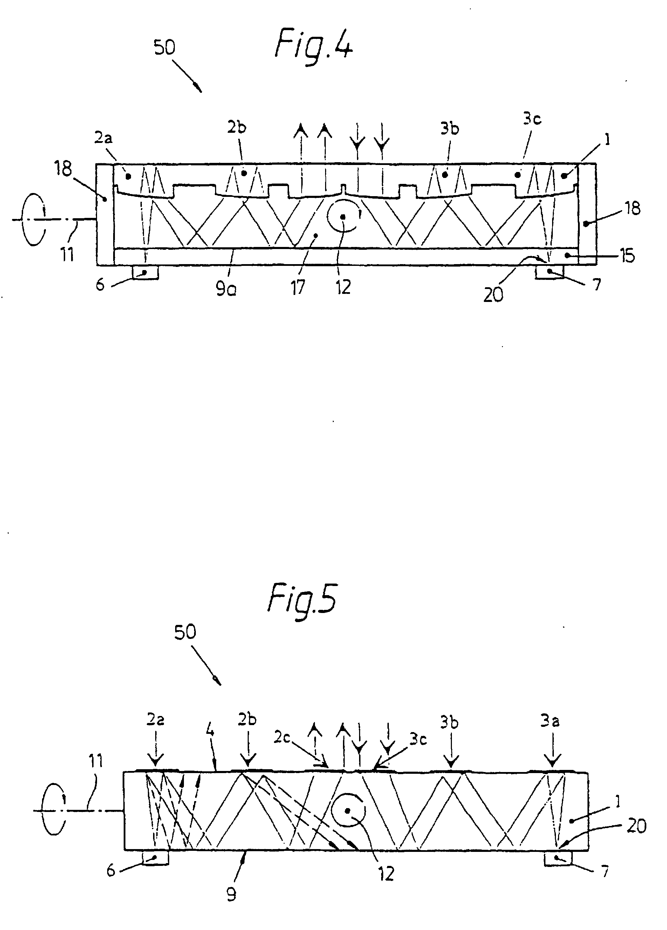

Fig. 4 zeigt eine schematische Querschnittsdarstellung eines Verfolgungssensors 50 mit refraktiven optischen Elementen 2a, 2b, 2c, 3a, 3b, 3c, die in einem Grundkörper 1 monolithisch integriert sind. Bei diesen optischen Elementen werden deren Brechungseigenschaften für die Strahlungsführung ausgenutzt. Der Grundkörper 1 ist mit einer Platte 15 über eine mechanische Halterung 18 starr verbunden. Die Strahlungsquelle 6 und der Detektor 7 befinden sich auf der Unterseite der Platte 15. Das Medium 17 zwischen dem Grundkörper 1 und der Platte 15 besteht im einfachsten Fall aus Luft, kann aber auch aus anderen gasförmigen, flüssigen oder festen Substanzen mit geeignetem Brechungsindex bestehen.

Die Strahlung der Strahlungsquelle 6 wird bei Übergängen zwischen dem Medium 17 und dem Grundkörper 1 gebrochen. Durch die gekrümmten Oberflächen der refraktiven optischen Elemente 2a, 2b, 2c, 3a, 3b, 3c ergeben sich abbildende Eigenschaften. Dabei werden an die Krümmung der Oberflächen geringere Genauigkeitsanforderungen gestellt als es bei den oben beschriebenen reflektiven optischen Elementen erforderlich ist.

Die Oberfläche 9a der Platte 15 reflektiert die Strahlung, so daß sich ein fortlaufender Strahlengang ergibt. Selbstverständlich kann die Platte 15 auch durch einen dem Grundkörper 1 ähnlichen Grundkörper mit weiteren optischen Elementen ersetzt werden, so daß die monolithisch integrierten refraktiven Elemente 2a, 2b, 2c, 3a, 3b, 3c auf zwei unterschiedlichen Flächen angeordnet sind. Darüber hinaus können für den Verfolgungssensor 50 mit refraktiven optischen Elementen 2a, 2b, 2c, 3a, 3b, 3c alle Ausführungsformen in Analogie zu den in der Beschreibung zu Fig.3 genannten Varianten dargestellt werden.

Fig. 5 zeigt eine schematische Querschnittsdarstellung eines Verfolgungssensors 50 mit monolithisch integrierten diffraktiven optischen Elementen 2a, 2b, 2c, 3a, 3b, 3c, die auf einer Fläche 4 angeordnet sind. Bei diesen optischen Elementen werden deren beugende Eigenschaften zur Strahlungsführung ausgenutzt. Aufgrund dieser Eigenschaften erzeugt jedes der diffraktiven Elementen 2a, 2b, 2c, 3a, 3b, 3c eine Strahlung mit mehreren Beugungsordnungen. Die verschiedenen Beugungsordnungen unterscheiden sich durch ihre Strahlungsrichtung. Ein jeweils nachfolgendes diffraktives optisches Element ist dabei so angeordnet, daß es die Strahlung mehrerer Beugungsordnungen - zumindest aber die Strahlung einer Beugungsordnung - empfangen kann. Dies wird mit den durchgezogenen Linien in Fig. 5 symbolisiert. Die Strahlung der übrigen Beugungsordnungen wird entweder absorbiert oder verläßt den Verfolgungssensor 50 anderweitig ohne dabei auf den Detektor 7 zu gelangen. Dieser Fall ist für die Beugung 0. Ordnung an den optischen Elementen 2a und 2b durch die gestrichelten Linien beispielhaft dargestellt.

Aufgrund der Beugung gehorchen Einfallswinkel und Ausfallswinkel der Strahlung an den diffraktiven Elementen 2a, 2b, 2c, 3a, 3b, 3c nicht dem bekannten Reflexionsgesetz an spiegelnden Flächen, von der Beugung 0. Ordnung abgesehen. Den Beugungswinkeln entsprechend werden die diffraktiven Elemente 2a, 2b, 2c, 3a, 3b, 3c auf dem Grundkörper 1 versetzt zueinander angeordnet. Dabei soll letztlich den Detektor 7 die Strahlung vorzugsweise nur einer Beugungsordnung erreichen. Die diffraktiven optischen Elemente 2a, 2b, 2c, 3a, 3b, 3c können natürlich auch in verschiedenen Flächen 4, 9 des Grundkörpers 1 monolithisch integriert sein.

Im übrigen kann der Grundkörper 1 ebenso eine Kombination von reflektiven, refraktiven und diffraktiven optischen Elementen 2a, 2b, 2c, 3a, 3b, 3c enthalten.

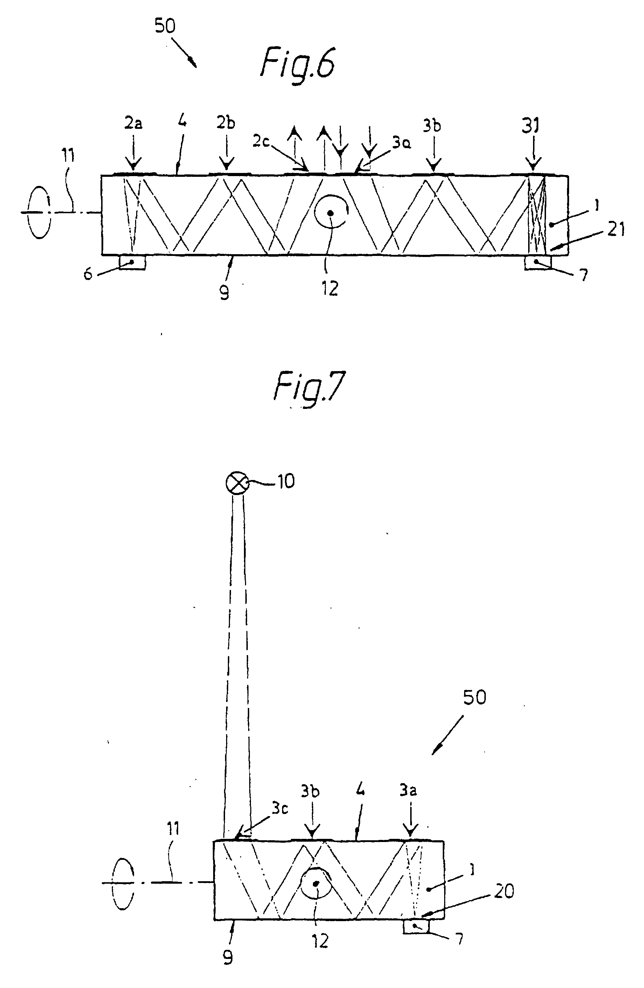

In Figur 6 ist ein Verfolgungssensor 50 wie in Figur 5 dargestellt, wobei zusätzlich ein die Wellenfront der empfangenen Strahlung derart strukturierendes optisches Element 31 monolithisch integriert ist, daß auf dem Detektor 7 eine Intensitätsverteilung 21 mit mehr als einem Intensitätsmaximum erzeugt wird. Das optische Element 31 besitzt in diesem Ausführungsbeispiel beugende Eigenschaften. Die verschiedenen Intensitätsmaxima entstehen durch Beugung höherer Ordnung. Ebensogut können für das optische Element 31 z.B. auch refraktive oder reflexive Strukturen genutzt werden, deren ortsabhängig unterschiedlich brechenden oder reflektierenden Eigenschaften einzelne Strahlenbündel erzeugen können, die auf dem Detektor 7 die Intensitätsverteilung 21 ergeben.

Die Intensitätsverteilung 21, die auch als ein Intensitätsmuster betrachtet werden kann, erhöht durch die Vielzahl der Intensitätsmaxima die Meßgenauigkeit des Verfolgungssensors 50 bei der Bestimmung der lateralen Lage der Zielmarke 10. Die Meßgenauigkeit wird dabei besonders groß, wenn die Ortsfrequenzen der Intensitätsverteilung 21 und der Detektorstrukturen ähnlich groß sind und deshalb zu einem Überlagerungsmuster führen.

Auch der Erfassungsbereich des Verfolgungssensors 50, also die Größe des Gesichtsfeldes des Verfolgungssensors 50 innerhalb dessen die Zielmarke 10 registriert wird, wird durch die Intensitätsverteilung 21 erweitert. Die Intensitätsverteilung 21 reicht weit über die aktive Fläche des Detektors 7 hinaus, so daß auch bei einer nicht exakten Ausrichtung des Verfolgungssensors 50 auf die Zielmarke 10 diese trotzdem erfaßt wird. Dies ist insbesondere bei einer anfänglichen Grobanzielung der Zielmarke 10 vorteilhaft.

Die Strukturen des optischen Elements 31 können darüber hinaus so ausgebildet sein, daß sie zugleich auch abbildende Eigenschaften besitzen.

Mit der in Figur 7 dargestellten selbstleuchtenden Zielmarke 10 reduziert sich der optische Aufbau des Verfolgungssensors 50. Die von der Zielmarke 10 emittierte Strahlung tritt über das optische Element 3c in den Grundkörper 1 ein und wird über die weiteren optischen Elemente 3b, 3a auf den Detektor 7 geleitet. Sämtliche in den vorhergehenden Figuren dargestellten und beschriebenen Variationen für die Art und Anordnung von monolithisch integrierten optischen Elementen gelten selbstverständlich auch für diese reduzierte Form des Verfolgungssensors 50.

## Patentansprüche

1. Optischer Sensor (50) zum Verfolgen einer reflektierenden Zielmarke (10) mit einer optischen Strahlungsquelle (6) und ersten strahlungsumlenkenden und abbildenden optischen Elementen (2a,2b,2c) zur Beleuchtung der Zielmarke (10) und zweiten optischen Elementen (3a,3b,3c) zur Fokussierung der von der Zielmarke (10) reflektierten Strahlung auf einen ortsauflösenden optoelektronischen Detektor (7), **dadurch gekennzeichnet, daß** die optischen Elemente (2a,2b,2c,3a,3b,3c) auf oder / und in einem Grundkörper (1) aus optisch leitendem Material monolithisch integriert sind, wodurch die Strahlung innerhalb des Grundkörpers (1) geführt wird, und daß der Grundkörper (1) Oberflächenbereiche aufweist, aus denen die Strahlung nach den ersten optischen Elementen (2a,2b,2c) in Richtung der Zielmarke (10) austritt und in die die Strahlung nach ihrer Reflexion an der Zielmarke (10) in den Grundkörper (1) wieder eintritt.

2. Optischer Sensor (50) zum Verfolgen einer entfernten strahlungsemittierenden Zielmarke (10) mit optischen Elementen (3a,3b,3c) zum Empfang und zur Fokussierung der von der Zielmarke (10) emittierten Strahlung auf einen ortsauflösenden optoelektronischen Detektor (7), **dadurch gekennzeichnet, daß** die optischen Elemente (3a,3b,3c) auf oder / und in einem Grundkörper (1) aus optisch leitendem Material monolithisch integriert sind, und daß die von der Zielmarke (10) empfangene Strahlung innerhalb des Grundkörpers (1) geführt und von den optischen Elementen (3a,3b,3c) auf den Detektor (7) fokussiert wird.

3. Optischer Sensor nach Anspruch 1 oder 2, **dadurch gekennzeichnet, daß** die optischen Elemente (2a, 2b, 2c, 3a, 3b, 3c) im Grundkörper (1) durch Lithografie, durch Ätzen, Fräsen, Gravieren, Prägen, Blankpressen oder durch Spritzgußverfahren monolithisch integriert sind.

4. Optischer Sensor nach Anspruch 1 oder 2, **dadurch gekennzeichnet, daß** die optischen Elemente (2a, 2b, 2c, 3a, 3b, 3c) auf dem Grundkörper (1) aufgedampft oder repliziert sind.

5. Optischer Sensor nach einem der vorherigen Ansprüche, **dadurch gekennzeichnet, daß** die optischen Elemente (2a, 2b, 2c, 3a, 3b, 3c) reflektive Elemente sind.

6. Optischer Sensor nach einem der Ansprüche 1 bis 4, **dadurch gekennzeichnet, daß** die optischen Elemente (2a, 2b, 2c, 3a, 3b, 3c) refraktive Elemente sind.

7. Optischer Sensor nach einem der Ansprüche 1 bis 4, **dadurch gekennzeichnet, daß** die optischen Elemente (2a, 2b, 2c, 3a, 3b, 3c) aus diffraktiven Strukturen aufgebaut sind.

8. Optischer Sensor nach Anspruch 7, **dadurch gekennzeichnet, daß** die optischen Elemente (2a, 2b, 2c, 3a, 3b, 3c) derart aufgebaut und zueinander angeordnet sind, daß ausschließlich die Strahlung aus nur einer Beugungsordnung letztlich den Detektor (7) erreicht.

9. Optischer Sensor nach einem der Ansprüche 1 bis 4, **dadurch gekennzeichnet, daß** auf dem Grundkörper (1) eine Kombination von reflektiven, refraktiven und diffraktiven optischen Elementen (2a, 2b, 2c, 3a, 3b, 3c) monolithisch integriert ist.

10. Optischer Sensor nach einem der vorherigen Ansprüche, **dadurch gekennzeichnet, daß** die optischen Elementen (2a, 2b, 2c, 3a, 3b, 3c) auf einer einzigen Fläche (4) des Grundkörpers (1) angeordnet sind.

11. Optischer Sensor nach einem der Ansprüche 1 bis 9, **dadurch gekennzeichnet, daß** die optischen Elemente (2a, 2b, 2c, 3a, 3b, 3c) auf verschiedenen Flächen (4, 9) des Grundkörpers (1) angeordnet sind.

12. Optischer Sensor nach einem der vorherigen Ansprüche, **dadurch gekennzeichnet, daß** zur Verbesserung der Meßgenauigkeit und zur Erweiterung des Erfassungsbereichs zwischen der Strahlungsquelle (6) und dem Detektor (7) ein die Wellenfront der Strahlung derart strukturierendes optisches Element (31) angeordnet und monolithisch integriert ist, daß auf dem Detektor (7) eine Intensitätsverteilung (21) mit mehr als einem Intensitätsmaximum erzeugt wird.

13. Optischer Sensor nach Anspruch 12, **dadurch gekennzeichnet, daß** das die Wellenfront strukturierende optische Element (31) zugleich abbildende Eigenschaften besitzt.

14. Optischer Sensor nach Anspruch 12 oder 13, **dadurch gekennzeichnet, daß** die Ortsgrundfrequenz oder eine harmonische Ortsoberfrequenz der auf dem Detektor (7) erzeugten Intensitätsverteilung (21) mit der Ortsgrundfrequenz der strahlungsempfindlichen Strukturen des Detektors (7) ein niederfrequentes Überlagerungsmuster bildet.

## Claims

1. Optical sensor (50) for tracking a reflecting target mark (10) having an optical radiation source (6) and first radiation-deflecting and imaging optical elements (2a, 2b, 2c) for illuminating the target mark (10) and second optical elements (3a, 3b, 3c) for focusing the radiation reflected by the target mark (10) onto a position-resolving optoelectronic detector (7), **characterized in that** the optical elements (2a, 2b, 2c, 3a, 3b, 3c) are integrated monolithically on and/or in a base element (1) comprising optically conducting material, with the result that the radiation is conducted within the base element (1), and that the base element (1) has surface regions from which the radiation emerges after the first optical elements (2a, 2b, 2c) in the direction of the target mark (10) and in which the radiation enters the base element (1) again after reflection of said radiation by the target mark (10).

2. Optical sensor (50) for tracking a remote radiation-emitting target mark (10), comprising optical elements (3a, 3b, 3c) for receiving and for focusing the radiation emitted by the target mark (10) onto a position-resolving optoelectronic detector (7), **characterized in that** the optical elements (3a, 3b, 3c) are integrated monolithically on and/or in a base element (1) comprising optically conducting material, and that radiation received by the target mark (10) is conducted within the base element (1) and is focused by the optical elements (3a, 3b, 3c) onto the detector (7).

3. Optical sensor according to Claim 1 or 2, **characterized in that** the optical elements (2a, 2b, 2c, 3a, 3b, 3c) are integrated monolithically in the base element (1) by lithography, by etching, milling, engraving, embossing or blank pressing or by injection moulding methods.

4. Optical sensor according to Claim 1 or 2, **characterized in that** the optical elements (2a, 2b, 2c, 3a, 3b, 3c) on the base element (1) have been applied by vapour deposition or have been replicated.

5. Optical sensor according to any of the preceding Claims, **characterized in that** the optical elements (2a, 2b, 2c, 3a, 3b, 3c) are reflective elements.

6. Optical sensor according to any of Claims 1 to 4, **characterized in that** the optical elements (2a, 2b, 2c, 3a, 3b, 3c) are refractive elements.

7. Optical sensor according to any of Claims 1 to 4, **characterized in that** the optical elements (2a, 2b, 2c, 3a, 3b, 3c) are composed of diffractive structures.

8. Optical sensor according to Claim 7, **characterized in that** the optical elements (2a, 2b, 2c, 3a, 3b, 3c) are composed and are arranged relative to one another in such a way that exclusively the radiation from only one diffraction order finally reaches the detector (7).

9. Optical sensor according to any of Claims 1 to 4, **characterized in that** a combination of reflective, refractive and diffractive optical elements (2a, 2b, 2c, 3a, 3b, 3c) is integrated monolithically on the base element (1).

10. Optical sensor according to any of the preceding Claims, **characterized in that** the optical elements (2a, 2b, 2c, 3a, 3b, 3c) are arranged on a single surface (4) of the base element (1).

11. Optical sensor according to any of Claims 1 to 9, **characterized in that** the optical elements (2a, 2b, 2c, 3a, 3b, 3c) are arranged on different surfaces (4, 9) of the base element (1).

12. Optical sensor according to any of the preceding Claims, **characterized in that**, for improving the accuracy of measurement and for extending the range of recognition, an optical element (31) which structures the wave front of the radiation in such a way that an intensity distribution (21) having more than one intensity maximum is produced on the detector (7) is arranged and integrated monolithically between the radiation source (6) and the detector (7).

13. Optical sensor according to Claim 12, **characterized in that** the optical element (31) which structures the wave front simultaneously has imaging properties.

14. Optical sensor according to Claim 12 or 13, **characterized in that** the fundamental spatial frequency or a harmonic spatial frequency of the intensity distribution (21) produced on the detector (7), together with the fundamental spatial frequency of the radiation-sensitive structures of the detector (7), forms a low-frequency superposition pattern.

## Revendications

1. Capteur optique (50) pour la poursuite d'un repère de visée (50) réfléchissant, avec une source de rayonnement optique (6) et des premiers éléments optiques (2a,2b,2c) déviant le rayonnement et produisant une illustration, pour illuminer le repère de visée (10), et des deuxièmes éléments optiques (3a,3b,3c) pour la focalisation du rayonnement réfléchi par le repère de visée (10) sur un détecteur optoélectronique (7) présentant une résolution locale, **caractérisé en ce que** les éléments optiques (2a,2b,2c,3a,3b,3c) sont intégrés de façon monolithique sur et/ou dans un corps de base (1) en matériau optiquement conducteur, faisant que le rayonnement est guidé à l'intérieur du corps de base (1), et **en ce que** le corps de base (1) présente des zones de surface d'où sort le rayon après les premiers éléments optiques (2a,2b,2c), dans la direction du repère de visée (10) et dans lesquelles le rayon entre de nouveau dans le corps de base (1), après sa réflexion sur le repère de visée (10).

2. Capteur optique (50) pour la poursuite d'un repère de visée (10) distant et émettant un rayonnement, avec des éléments optiques (3a,3b,3c), pour la réception et la focalisation du rayonnement émis par le repère de visée (10), sur un détecteur optoélectronique (7) présentant une résolution locale, **caractérisé en ce que** les éléments optiques (3a,3b,3c) sont intégrés de façon monolithique sur et/ou dans un corps de base (1) en matériau optiquement conducteur, et **en ce que** le rayonnement reçu du repère de visée (10) est guidé à l'intérieur du corps de base (1) et focalisé sur le détecteur (7) par les éléments optiques (3a,3b,3c).

3. Capteur optique selon la revendication 1 ou 2, **caractérisé en ce que** les éléments optiques (2a,2b,2c,3a,3b,3c) sont intégrés de façon monolithique dans un corps de base (1) par un processus de lithographie, par un processus d'attaque chimique, de fraisage, de gravage, de façonnage tridimensionnel, d'emboutissage de flan ou par un procédé de moulage sous pression.

4. Capteur optique selon la revendication 1 ou 2, **caractérisé en ce que** les éléments optiques (2a,2b,2c,3a,3b,3c) sont appliqués par vaporisation sur le corps de base (1) ou bien répliqués.

5. Capteur optique selon l'une des revendications précédentes, **caractérisé en ce que** les éléments optiques (2a,2b,2c,3a,3b,3c) sont des éléments réfléchissants.

6. Capteur optique selon l'une des revendications 1 ou 4, **caractérisé en ce que** les éléments optiques (2a,2b,2c,3a,3b,3c) sont des éléments réfractifs.

7. Capteur optique selon l'une des revendications 1 ou 4, **caractérisé en ce que** les éléments optiques (2a,2b,2c,3a,3b,3c) sont construits à partir de structures diffractives.

8. Capteur optique selon la revendication 7, **caractérisé en ce que** les éléments optiques (2a,2b,2c,3a,3b,3c) sont construits et disposés les uns par rapport aux autres de manière qu'exclusivement le rayonnement issu seulement d'un ordre de diffraction atteigne enfin le détecteur (7).

9. Capteur optique selon l'une des revendications 1 ou 4, **caractérisé en ce qu'**une combinaison d'éléments optiques (2a,2b,2c,3a,3b,3c) réflectifs, réfractifs et diffractifs est intégrée de façon monolithique.

10. Capteur optique selon l'une des revendications précédentes, **caractérisé en ce que** les éléments optiques (2a,2b,2c,3a,3b,3c) sont disposés sur une face (4) commune du corps de base (1).

11. Capteur optique selon l'une des revendications 1 ou 9, **caractérisé en ce que** les éléments optiques (2a,2b,2c,3a,3b,3c) sont disposés sur des faces (4, 9) différentes du corps de base (1).

12. Capteur optique selon l'une des revendications précédentes, **caractérisé en ce que**, pour améliorer la précision de mesure et pour étendre la plage de détection entre la source de rayonnement (6) et le détecteur (7), est disposé un élément optique (31) qui structure le front d'onde du rayonnement et est intégré de façon monolithique, de manière à générer sur le détecteur (7) une distribution d'intensité (21) ayant plus qu'un maximum d'intensité.

13. Capteur optique selon la revendication 12, **caractérisé en ce que** l'élément optique (31) structurant le front d'onde comporte en même temps des propriétés d'illustration.

14. Capteur optique selon la revendication 12 ou 13, **caractérisé en ce que** la fréquence de base locale, ou une fréquence supérieure locale harmonique de la distribution d'intensité (21) générée sur le détecteur (7), forme, avec la fréquence de base locale des structures sensibles au rayonnement du détecteur (7), un modèle à superposition ayant une basse fréquence.
